# EUROPÄISCHE PATENTSCHRIFT

(11) **EP 2 814 634 B1**
(45) Veröffentlichungstag und Bekanntmachung des Hinweises auf die Patenterteilung: **15.07.2020**
(21) Anmeldenummer: 13704095.2
(22) Anmeldetag: 12.02.2013
(51) Int. Cl.: B23P 11/02, H05B 6/10, H05B 6/14, H05B 6/40

(54) **VORRICHTUNG ZUR KÜHLUNG EINES SCHRUMPFFUTTERS**
APPARATUS FOR COOLING A SHRINK-FIT CHUCK
DISPOSITIF PERMETTANT LE REFROIDISSEMENT D'UN MANDRIN DE FRETTAGE

(30) Priorität: 13.02.2012 DE 102012002596
(43) Veröffentlichungstag der Anmeldung: 24.12.2014
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2013/052729
(87) Internationale Veröffentlichungsnummer: WO 2013/120821

(56) Entgegenhaltungen:
- WO-A1-2004/043643
- WO-A1-2008/145234
- WO-A2-2007/028522
- WO-A2-2008/098752
- DE-A1-102007 044 097
- DE-A1-102009 017 461
- DE-A1-102009 034 730
- DE-A1-102010 033 160

## Beschreibung

Die Erfindung betrifft eine Vorrichtung zur Kühlung eines Schrumpffutters nach dem Oberbegriff des Anspruchs 1.

Eine Vorrichtung zur Kühlung eines Schrumpffutters ist aus der DE 10 2009 017 461 A1 bekannt. Die dort offenbarte Vorrichtung enthält einen an einer Führungsschiene vertikal verschiebbar geführten Kühlaufsatz, der zur Aufnahme eines zuvor zum thermischen Ein- oder Ausschrumpfen eines Bearbeitungswerkzeugs aufgeheizten Schrumpfspannfutters dient. Der Kühlaufsatz ist derart ausgebildet, dass er das Schrumpfspannfutter unter Begrenzung eines Ringkanals umgreift, wobei in den Ringkanal mehrere Blasdüsen zum Ausblasen von Druckluft als Kühlmittel münden. Bei dieser bekannten Vorrichtung wird also die Abkühlung des Schrumpfspannfutters durch Druckluft erreicht. Allerdings ist die Kühlwirkung bei einer Abkühlung durch Druckluft beschränkt.

Es sind auch bereits Vorrichtungen bekannt, bei denen die Abkühlung durch flüssiges Kühlmittel erfolgt. Aus der WO 2007/028522 A2 ist z.B. eine Vorrichtung bekannt, bei der das Schrumpfspannfutter über eine Kühlmitteldüse mit flüssigem Kühlmittel abgespritzt wird. Zur Abkühlung wird hier über das Schrumpfspannfutter und die Kühlmitteldüse ein topfförmiger Behälter zur Abschirmung des versprühten Kühlmittels nach außen hin gestülpt. Das versprühte und durch den Behälter nach außen abgeschirmte Kühlmittel muss in einem unterhalb des Schrumpfspannfutters angeordneten Auffangbehälter gesammelt oder über einen geschlossenen Kreislauf zur Kühlmitteldüse zurückgeführt werden. Außerdem ist eine zusätzliche Einrichtung zum Abblasen der auf dem Schrumpfspannfutter nach der Kühlung zurückbleibenden Flüssigkeit vorgesehen. Für die Abschirmung, Sammlung des Kühlmittels und anschließende Trocknung ist hier allerdings ein erheblicher konstruktiver Aufwand erforderlich.

Die WO 2008/145234 A1 betrifft eine Vorrichtung zum Ein- und/oder Ausspannen von einen Werkzeugschaft aufweisenden Werkzeugen in ein Werkzeugspannfutter, das eine an ihrem freien Ende offene Hülsenpartie aus elektrisch leitendem Werkstoff zur reibschlüssigen Aufnahme des Werkzeugschafts aufweist, mit einer die Hülsenpartie des Werkzeugspannfutters umfassenden, mit einem vorzugsweise hochfrequenten Wechselstrom beaufschlagbaren, als Ring- oder Zylinderspule ausgebildeten Induktionsspule, wobei die Vorrichtung mindestens einen zwischen der inneren Umfangsfläche der Induktionsspule und der Hülsenpartie des Werkzeugspannfutters entlanglaufenden Kanal umfasst, durch den ein die Hülsenpartie des Werkzeugspannfutters kühlendes Kühlmittel hindurchgespült wird.

Diese Schrift offenbart die Merkmale des Oberbegriffes des Anspruchs 1.

Die WO 2004/043643 betrifft eine Schrumpfvorrichtung zum Einschrumpfen eines Werkzeugs in eine Werkzeugaufnahme eines Werkzeugfutters mit einer Heizeinrichtung zum Aufheizen der Werkzeugaufhahme, wobei die Schrumpfvorrichtung eine Gasabsaugvorrichtung zum Absaugen von aus der Werkzeugaufnahme entweichenden Gasen aufweist.

Die DE 10 2009 034 730 A1 betrifft eine Vorrichtung zum Kühlen eines zuvor einer Wärmeapplikation unterworfenen Gegenstandes, im Regelfall eines mehrteiligen Sehrumpfverbundes, insbesondere in Gestalt eines Schrumpffutters, in das der Schaft eines Werkzeugs ein- oder ausgespannt wurde, wobei die Vorrichtung eine Pumpe umfasst, mit Hilfe derer sie einen Trägergasstrom erzeugt, welcher mit einem flüssigen Kühlmedium befrachtet wird, so dass ein volumenmäßig überwiegend aus dem Trägergas bestehender Kühlmittelstrom entsteht, der dann zumindest die zu kühlende Partie des Gegenstandes bestreicht.

Aufgabe der Erfindung ist es, eine Vorrichtung der eingangs genannten Art zu schaffen, die auf einfache und kostengünstige Weise eine effiziente und schnelle Kühlung unterschiedlicher Schrumpffutter ermöglicht.

Diese Aufgabe wird durch eine Vorrichtung mit den Merkmalen des Anspruchs 1 gelöst. Zweckmäßige Weiterbildungen und vorteilhafte Ausführungsformen der Erfindung sind in den Unteransprüchen angegeben.

Bei der erfindungsgemäßen Vorrichtung sind an den Kühlaufsatz eine Einrichtung für die Zuführung eines flüssigen Kühlmittels in den Innenraum des Kühlaufsatzes über die eine oder mehrere Zufuhröffnungen und eine Absaugeinrichtung zur Absaugung des zur Kühlung des Schrumpfspannfutters verwendeten flüssigen Kühlmittels aus dem Innenraum des Kühlaufsatzes angeschlossen. Die Absaugeinrichtung enthält eine an der Oberseite des Kühlaufsatzes angeordnete mit mindestens einem Absaugaggregat verbundene Absaugleitung, wobei durch das Absaugaggregat über die Absaugleitung Luft an der Unterseite des Kühlaufsatzes angesaugt wird. Die angesaugte Luft reißt das flüssige Kühlmittel mit und transportiert dies zu einem Sammelbehälter. Das flüssige Kühlmittel, durch das eine besonders effektive und schnelle Abkühlung des Schrumpffutters erreichbar ist, wird noch innerhalb des Kühlaufsatzes abgesaugt, so dass das Schrumpffutter nach der Abkühlung trocken ist und keine aufwändigen Auffangeinrichtungen für das Kühlmittel unterhalb des Kühlaufsatzes erforderlich sind. Durch das Absaugen der Kühlflüssigkeit kann zwischen der Innenwand des Kühlaufsatzes und der Außenwand des Schrumpffutters auch ein relativ großer Spalt vorhanden sein, so dass ein einziger Kühlaufsatz für eine Vielzahl unterschiedlicher Schrumpffutter mit einem großen Durchmesserbereich eingesetzt werden kann.

Die Einrichtung für die Zuführung des flüssigen Kühlmittels weist zweckmäßigerweise eine Kühlmittelpumpe und einen mit der Kühlmittelpumpe verbundenen Kühlmittelanschluss am Kühlaufsatz zur Zuführung des flüssigen Kühlmittels zu den Zuführöffnungen auf Die Zuführöffnungen können z.B. über Kühlbohrungen mit einem Ringraum verbunden sein, wobei sich der Ringraum in einer vorteilhaften Weise zwischen einer Außenhülse und einer Innenhülse des Kühlaufsatzes befindet und die Kühlbohrungen sowie die Zuführöffnungen in der Innenhülse angeordnet sind.

Die Absaugeinrichtung enthält eine an der Oberseite des Kühlaufsatzes angeordnete Absaugleitung, die mit mindestens einem Absaugaggregat verbunden ist. Über die Absaugeinrichtung kann so innerhalb des Kühlaufsatzes ein nach oben gerichteter Luftstrom erzeugt werden, durch den die Kühlflüssigkeit nach oben abgesaugt und ein Abfließen der Kühlflüssigkeit nach unten vermieden werden kann. Auch die Kühlbohrungen innerhalb des Kühlaufsatzes können schräg nach oben in Richtung der Oberseite des Kühlaufsatzes verlaufen, so dass das Kühlmittel schräg nach oben in Absaugrichtung auf das Schrumpffutter trifft und dadurch die Absaugung unterstützt wird.

In einer weiteren vorteilhaften Ausführung kann in der Außenhülse mindestens eine Ausnehmung vorgesehen sein, durch welche die vorzugsweise aus einem durchsichtigen Material bestehende Innenhülse sichtbar ist. Dadurch kann die Kühlung des Schrumpffutters von außen überwacht werden. An der Innenhülse können im Bereich der Ausnehmungen auch Markierungen angebracht sein, um so eine Möglichkeit zur axialen Positionierung des Kühlaufsatzes zu bieten. Zur axialen Positionierung des Kühlaufsatzes kann im Inneren aber auch ein mechanischer Anschlag vorgesehen sein, so dass der Kühlaufsatz auf dem Schrumpffutter aufsitzt.

Zur einfachen Bedienung der Vorrichtung und zur Automatisierung des Kühlvorgangs kann der Kühlaufsatz an einem Führungsteil vertikal verschiebbar angeordnet sein. Der Kühlaufsatz kann zweckmäßigerweise auf einen Halter zur Aufnahme des Schrumpffutters abgesenkt werden, wobei an dem Führungsteil ein unterer Fußbereich zur genauen Positionierung des Halters unterhalb des Kühlaufsatzes vorgesehen sein kann.

In einer weiteren zweckmäßigen Ausführung kann in dem Kühlaufsatz auch eine Induktionseinrichtung integriert sein. Dadurch kann der Kühlaufsatz nicht nur zur Abkühlung, sondern auch zum Einschrumpfen eingesetzt werden.

Weitere Besonderheiten und Vorzüge der Erfindung ergeben sich aus der folgenden Beschreibung eines bevorzugten Ausführungsbeispiels anhand der Zeichnung. Es zeigen:
- **Fig. 1**: eine schematische Darstellung einer Vorrichtung zur Kühlung eines Schrumpffutters in einer Perspektive;
- **Fig. 2**: die in Figur 1 gezeigte Vorrichtung in einer Rückansicht;
- **Fig. 3**: einen Kühlaufsatz in einer Seitenansicht;
- **Fig. 4**: den Kühlaufsatz von Figur 3 in einer Draufsicht;
- **Fig. 5**: eine Schnittansicht entlang der Linie A-A von Figur 4;
- **Fig. 6**: eine Schnittansicht entlang der Linie B-B von Figur 4;
- **Fig. 7**: eine schematische Darstellung des Kühlaufsatzes zur Erläuterung der Funktionsweise und
- **Figur 8**: ein weiteres Ausführungsbeispiel eines Kühlaufsatzes mit integrierter Induktionseinrichtung.

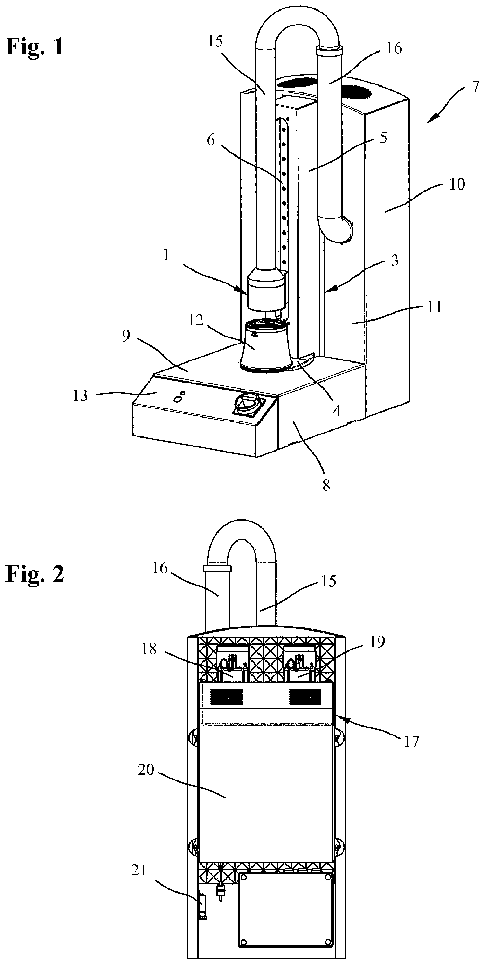

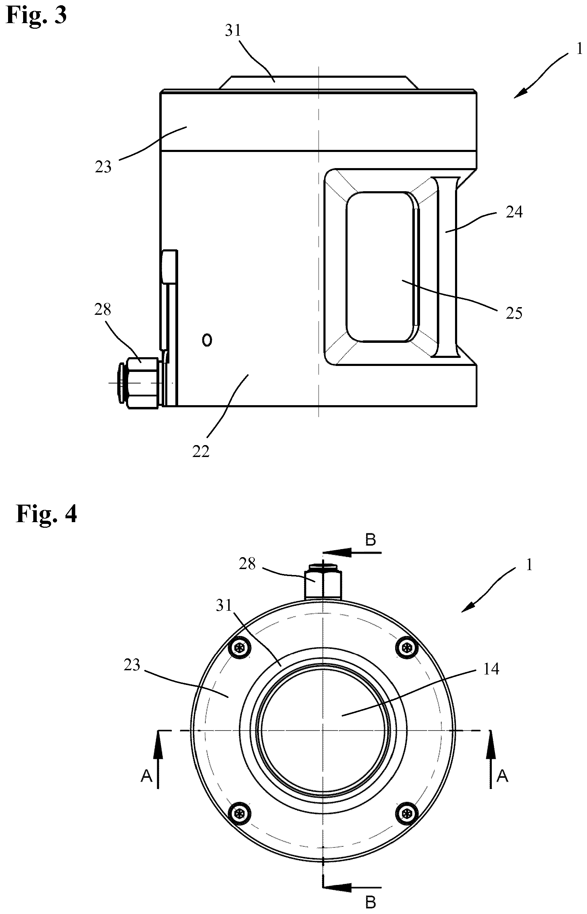

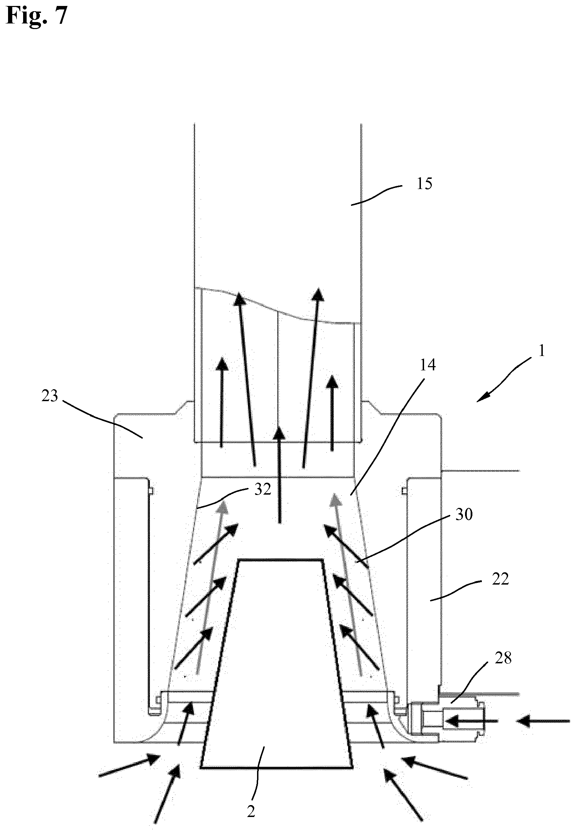

Die in den Figuren 1 und 2 schematisch dargestellte Vorrichtung zur Kühlung eines Schrumpffutters enthält einen in den Figuren 3 bis 5 gesondert dargestellten Kühlaufsatz 1, der auf ein in Figur 7 schematisch angedeutete Schrumpffutter 2 aufgesetzt werden kann. Eine derartige Vorrichtung wird eingesetzt, um ein Schrumpfspannfutter 2 abzukühlen, nachdem dieses zum Einschrumpfen oder zur Entnahme eines eingeschrumpften Werkzeugs erhitzt worden ist.

Bei der in Figur 1 gezeigten Ausführung ist der Kühlaufsatz 1 an einem ständerförmigen Führungsteil 3 vertikal verschiebbar geführt. Das Führungsteil 3 enthält einen unteren Fußbereich 4 und einen vertikal verlaufenden oberen Führungsbereich 5, in dem eine Führungsschiene 6 zur linearen Führung des Kühlaufsatzes 1 untergebracht ist. Das Führungsteil 3 ist bei der gezeigten Ausführung an einem Gehäuse 7 angeordnet. Das hier L-förmige Gehäuse 7 weist ein vorderes Auflageteil 8 mit einer waagrechten Auflagefläche 9 und ein hinteres Gehäuseteil 10 mit einer vertikalen vorderen Wandfläche 11 auf Auf der waagrechten Auflagefläche 9 des vorderen Auflageteils 8 steht das Führungsteil 3 mit seinem unteren Fußbereich 4 auf Der vertikal verlaufende Führungsbereich 5 des Führungsteils 3 ist an der vertikalen vorderen Wandfläche 11 des hinteren Gehäuseteils 10 befestigt.

Der untere Fußbereich 4 des Führungsteils 3 ist in Art einer halbschalenförmigen Aufnahme zur positionsgenauen Anlage eines Halters 12 für die Aufnahme des Schrumpffutters 2 ausgeführt. Durch die Anlage des Halters 12 im halbschalenförmigen Fußbereich 4 kann das im Halter 12 aufgenommene Schrumpffutter 2 genau unter dem Kühlaufsatz 1 angeordnet werden, so dass der Kühlaufsatz 1 und das Schrumpffutter axial zueinander ausgerichtet sind. An dem vorderen Auflageteil 8 des Gehäuses 7 befindet sich eine Bedienkonsole 13, an der mehreren Bedienelemente zur Steuerung und Bedienung der Kühlvorrichtung angeordnet sind.

Auf der Oberseite des gemäß den Figuren 4 bis 7 mit einem durchgehenden Innenraum 14 versehenen Kühlaufsatzes 1 ist das eine Ende einer z.B. als flexibler Schlauch oder stabiles Rohr ausgebildeten Absaugleitung 15 angeordnet. Das andere Ende der Absaugleitung 15 ist an einen rohrförmigen Absaugstutzen 16 angeschlossen, der zu einem in Figur 2 dargestellten Absaugaggregat 17 führt. Der Absaugstutzen 16 ist neben dem Führungsteil 3 an der vorderen Wandfläche 11 des hinteren Gehäuseteils 10 befestigt. Das Absaugaggregat 17 bildet zusammen mit dem Absaugstutzen 16 und der Absaugleitung 15 eine Absaugeinrichtung, über die ein innerhalb des Kühlaufsatzes 1 auf das Schrumpffutter 2 aufgesprühtes flüssiges Kühlmittel abgesaugt und zu einem Auffangbehälter transportiert werden kann.

Wie aus Figur 2 hervorgeht, ist das Absaugaggregat 17 in dem hinteren Gehäuseteil 10 untergebracht. Das Absaugaggregat 17 weist bei der gezeigten Ausführung zwei separate Motoren 18 bzw. 19 und einen Sammelbehälter 20 zum Auffangen der aus dem Kühlaufsatz 1 abgesaugten Kühlflüssigkeit auf. In dem hinteren Gehäuseteil 10 können auch weitere Versorgungseinheiten und eine Kühlmittelpumpe 21 für die Zuleitung des flüssigen Kühlmittels zum Kühlaufsatz 1 angeordnet sein.

Der in den Figuren 3 bis 6 in verschiedenen Ansichten gezeigte Kühlaufsatz 1 besteht aus einer Außenhülse 22 und einer innerhalb der Außenhülse 22 angeordneten Innenhülse 23 mit dem durchgängigen Innenraum 14. In der Außenhülse 22 sind gemäß Figur 3 drei durch Stege 24 voneinander getrennte Ausnehmungen 25 vorgesehen, durch welche die vorzugsweise aus einem durchsichtigen Material bestehende Innenhülse 23 sichtbar ist. Dadurch kann die Kühlung des Schrumpffutters von außen überwacht werden. Die durchsichtige Innenhülse 23 kann auch mit einer LED farbig (rot/grün) beleuchtet werden, um z.B. durch unterschiedliche Farben die noch nicht ausreichende oder ausreichende Kühlung anzuzeigen. Die Vorrichtung kann auch Einrichtungen zur Messung der Temperatur des Schrumpffutters 2 und/oder zur Messung der Temperatur des Luftstroms aufweisen. Diese können an Kühlaufsatz 1 oder an anderen geeigneten Bauteilen angeordnet sein.

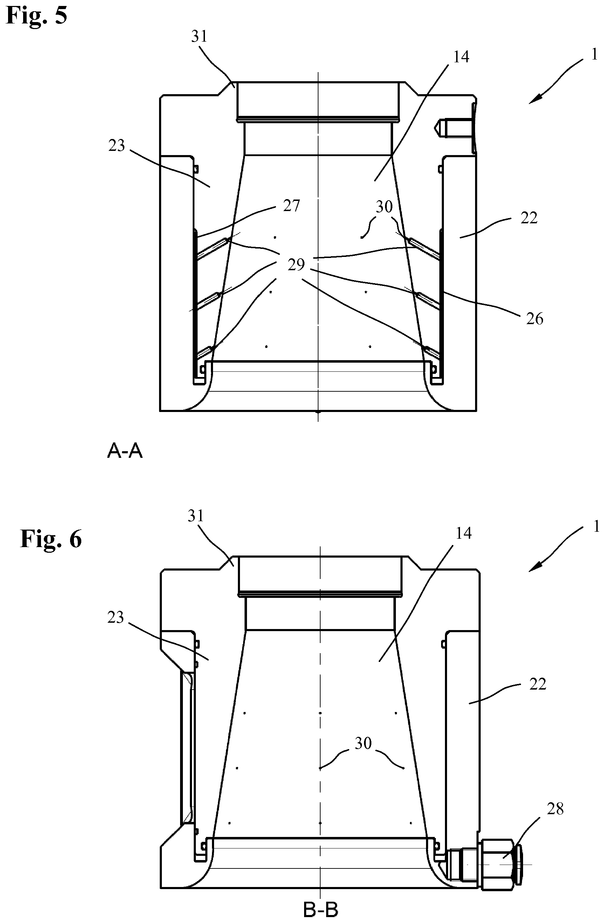

Wie aus Figur 5 hervorgeht, ist zwischen der Außenhülse 22 und der Innenhülse 23 ein Ringraum 26 vorgesehen. Bei der gezeigten Ausführung wird der Ringraum 26 durch eine umlaufende Vertiefung 27 an der Außenseite der Innenhülse 23 gebildet. Der Ringraum 26 kann aber in entsprechender Weise auch durch eine umlaufende Vertiefung an der Innenseite der Außenhülse 22 gebildet werden. Über einen Kühlmittelanschluss 28 an der Außenhülse 22 kann flüssiges Kühlmittel zum Ringraum 26 gefördert werden. Hierfür kann die Kühlmittelpumpe 21 über geeignete Leitungen mit dem Kühlmittelanschluss 28 verbunden sein. In der Innenhülse 23 befinden sich mehrere über den Umfang verteilte Kühlbohrungen 29, die vom Ringraum 26 schräg nach oben zum Innenraum 14 führen und durch Zufuhröffnungen 30 in den Innenraum 14 münden. Das von der Kühlmittelpumpe 21 über eine entsprechende Leitung und den Kühlmittelanschluss 28 zum Ringraum 26 geförderte Kühlmittel kann so über die Kühlbohrungen 29 auf die Außenseite eines Schrumpffutters gespritzt werden. Zur Erzeugung einer guten Saugwirkung weist der Innenraum 14 der Innenhülse 23 einen sich nach oben verjüngenden Querschnitt auf. An dem oberen Ende der Innenhülse ist ein Anschluss 31 für die Absaugleitung 15 vorgesehen.

Im Folgenden wird die Funktionsweise der vorstehend beschriebenen Vorrichtung anhand der Figur 7 erläutert.

Der Kühlaufsatz 1 wird so auf das zu kühlende Schrumpffutter 2 aufgesetzt, dass zwischen einer Innenwand 32 des Innenrings 22 und der Außenseite des Schrumpffutters 2 ein ausreichend großer Spalt zum Einsaugen von Luft verbleibt. Über den Kühlmittelanschluss 28 wir dem Kühlaufsatz 1 dann Wasser oder ein anderes flüssiges Kühlmittel zugeführt. Dieses wird über die Zuführöffnungen 30 auf das Schrumpffutter 2 gespritzt. Gleichzeitig wird durch das in Figur 2 gezeigte Absaugaggregat 17 über die Absaugleitung 15 Luft an der Unterseite des Kühlaufsatzes 1 angesaugt. Die angesaugte Luft reißt die Kühlflüssigkeit nach dem Aufspritzen auf das Schrumpffutter 2 mit und transportiert diese zu dem in Figur 2 gezeigten Sammelbehälter 20. Der Absaugvorgang kann etwas länger als die eigentliche Kühlung durchgeführt werden, so dass sämtliche Kühlflüssigkeit abgesaugt und so das Schrumpffutter 2 nach der Kühlung möglichst trocken entnommen werden kann. Zur Verbesserung der Trocknungswirkung können im Innenraum 14 Luftleitelemente angebracht sein, um den Luftstrom an verdeckte Flächen des Schrumpffutters heranzuführen.

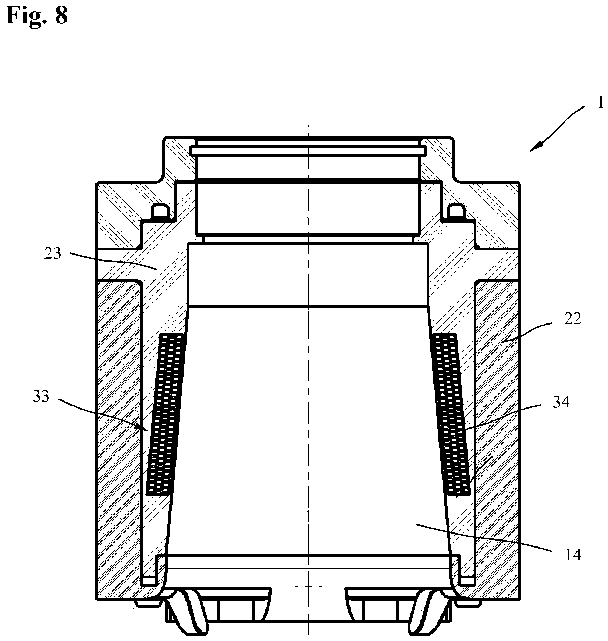

In Figur 8 ist ein weiteres Ausführungsbeispiel eines Kühlaufsatzes 1 mit einer Außenhülse 22, einer innerhalb der Außenhülse 22 angeordneten Innenhülse 23 und einem durchgängigen Innenraum 14 gezeigt. Bei dieser Ausführung ist in dem Kühlaufsatz 1 eine Induktionseinrichtung 33 integriert. Durch diese Induktionseinrichtung kann ein in Figur 7 schematisch dargestelltes Schrumpffutter 2 zum Einschrumpfen eines Werkzeugs erwärmt werden. Der Kühlaufsatz 1 kann so nicht nur zur Abkühlung sondern auch zum Einschrumpfen eingesetzt werden. Bei der gezeigten Ausführung weist die Induktionseinrichtung 33 eine in der Innenhülse 23 angeordnete Induktionsspule 34 auf.

## Patentansprüche

1. Vorrichtung zur Kühlung eines Schrumpffutters (2) mit einem auf das Schrumpffutter (2) aufsetzbaren Kühlaufsatz (1), der mehrere Zufuhröffnungen (30) für die Zuleitung eines Kühlmittels in einen Innenraum (14) des Kühlaufsatzes (1) enthält, wobei an den Kühlaufsatz (1) eine Einrichtung (21, 28) für die Zuführung eines flüssigen Kühlmittels in den Innenraum (14) des Kühlaufsatzes (1) über die Zufuhröffnungen (30) und eine Absaugeinrichtung (15, 16, 17) zur Absaugung des zur Kühlung des Schrumpfspannfutters (2) verwendeten flüssigen Kühlmittels aus dem Innenraum (14) des Kühlaufsatzes (1) angeschlossen sind, **dadurch gekennzeichnet, dass** die Absaugeinrichtung (15, 16, 17) eine an der Oberseite des Kühlaufsatzes angeordnete, mit mindestens einem Absaugaggregat (17) verbundene Absaugleitung (15) enthält und das Absaugaggregat (17) eingerichtet ist, um über die Absaugleitung (15) Luft an der Unterseite des Kühlaufsatzes (1) anzusaugen.

2. Vorrichtung nach Anspruch 1, **dadurch gekennzeichnet, dass** die Einrichtung (21, 28) für die Zuführung des flüssigen Kühlmittels eine Kühlmittelpumpe (21) und einen mit der Kühlmittelpumpe (21) verbundenen Kühlmittelanschluss (28) am Kühlaufsatz (1) zur Zuführung des flüssigen Kühlmittels zu den Zuführöffnungen (30) enthält.

3. Vorrichtung nach Anspruch 1 oder 2, **dadurch gekennzeichnet, dass** die Zuführöffnungen (30) über Kühlbohrungen (29) mit einem Ringraum (26) verbunden sind.

4. Vorrichtung nach Anspruch 3, **dadurch gekennzeichnet, dass** sich der Ringraum (26) zwischen einer Außenhülse (22) und einer Innenhülse (23) des Kühlaufsatzes (1) befindet und dass die die Kühlbohrungen (29) und die Zuführöffnungen (30) in der Innenhülse (23) angeordnet sind.

5. Vorrichtung nach Anspruch 4, **dadurch gekennzeichnet, dass** in der Außenhülse (22) mindestens eine Ausnehmung (25) vorgesehen ist, durch welche die vorzugsweise aus einem durchsichtigen Material bestehende Innenhülse (23) sichtbar ist.

6. Vorrichtung nach Anspruch 5, **dadurch gekennzeichnet, dass** an der Innenhülse (23) im Bereich der Ausnehmung (25) Markierungen zur axialen Positionierung des Kühlaufsatzes (1) auf dem Schrumpffutter (2) vorgesehen sind.

7. Vorrichtung nach einem der Ansprüche 3 bis 6, **dadurch gekennzeichnet, dass** die Kühlbohrungen (29) schräg nach oben in Richtung einer Oberseite des Kühlaufsatzes (1) verlaufen.

8. Vorrichtung nach Anspruch 1 bis 7, **dadurch gekennzeichnet, dass** der Kühlaufsatz (1) an seiner Oberseite einen Anschluss (31) für die Absaugleitung (15) enthält.

9. Vorrichtung nach einem der Ansprüche 1 bis 8, **dadurch gekennzeichnet, dass** der Kühlaufsatz (1) an einem Führungsteil (3) vertikal verschiebbar angeordnet ist.

10. Vorrichtung nach Anspruch 9, **dadurch gekennzeichnet, dass** der Kühlaufsatz (1) auf einen Halter (12) zur Aufnahme des Schrumpffutters (2) absenkbar ist.

11. Vorrichtung nach Anspruch 10, **dadurch gekennzeichnet, dass** das Führungsteil (3) einen unteren Fußbereich (4) enthält, der zur genauen Positionierung des Halters (12) unterhalb des Kühlaufsatzes ausgebildet ist.

12. Vorrichtung nach einem der Ansprüche 1 bis 11, **dadurch gekennzeichnet, dass** an dem Kühlaufsatz (1) ein mechanischer Anschlag zur Positionierung des Kühlaufsatzes auf dem Schrumpffutter (2) angeordnet ist.

13. Vorrichtung nach einem der Ansprüche 1 bis 12, **dadurch gekennzeichnet, dass** sie eine Einrichtung zur Messung der Temperatur des Schrumpffutters (2) und/oder eine Einrichtung zur Messung der Temperatur des Luftstroms enthält.

14. Vorrichtung nach einem der Ansprüche 1 bis 13, **dadurch gekennzeichnet, dass** der Kühlaufsatz (1) Luftleitelemente zur Umlenkung des Luftstroms an verdeckte Flächen des Schrumpffutters (2) enthält.

15. Vorrichtung nach einem der Ansprüche 1 bis 14, **dadurch gekennzeichnet, dass** in dem Kühlaufsatz (1) eine Induktionseinrichtung (33) integriert ist.

## Claims

1. Apparatus for cooling a shrink-fit chuck (2) having a cooling attachment (1) which can be placed on the shrink-fit chuck (2) and which comprises a plurality of feed openings (30) for supplying a coolant into an interior (14) of the cooling attachment (1), wherein the coolant attachment (1) has connected thereto a device (21, 28) for feeding a liquid coolant into the interior (14) of the cooling attachment (1) via the feed openings (30), and a suctioning device (15, 16, 17) for suctioning the liquid coolant used for cooling the shrink-fit chuck (2) from the interior (14) of the coolant attachment (1), **characterized in that** the suctioning device (15, 16, 17) comprises a suctioning line (15) which is arranged on the upper side of the cooling attachment and which is connected to at least one suctioning unit (17), and the suctioning unit (17) is configured to suck in air at the underside of the cooling attachment (1) via the suctioning line (15).

2. Apparatus according to Claim 1, **characterized in that** the device (21, 28) for feeding the liquid coolant comprises a coolant pump (21) and a coolant connection (28), which is connected to the coolant pump (21), on the cooling attachment (1) for feeding the liquid coolant to the feed openings (30).

3. Apparatus according to Claim 1 or 2, **characterized in that** the feed openings (30) are connected to an annular space (26) via cooling bores (29).

4. Apparatus according to Claim 3, **characterized in that** the annular space (26) is situated between an outer sleeve (22) and an inner sleeve (23) of the cooling attachment (1), and **in that** the cooling bores (29) and the feed openings (30) are arranged in the inner sleeve (23).

5. Apparatus according to Claim 4, **characterized in that** at least one cutout (25) is provided in the outer sleeve (22), through which cutout the inner sleeve (23), which preferably consists of a transparent material, is visible.

6. Apparatus according to Claim 5, **characterized in that** markings for axially positioning the cooling attachment (1) in the shrink-fit chuck (2) are provided on the inner sleeve (23) in the region of the cutout (25).

7. Apparatus according to one of Claims 3 to 6, **characterized in that** the cooling bores (29) extend obliquely upwards in the direction of an upper side of the cooling attachment (1).

8. Apparatus according to Claims 1 to 7, **characterized in that** the cooling attachment (1) comprises on its upper side a connection (31) for the suctioning line (15).

9. Apparatus according to one of Claims 1 to 8, **characterized in that** the cooling attachment (1) is arranged so as to be vertically displaceable on a guide part (3).

10. Apparatus according to Claim 9, **characterized in that** the cooling attachment (1) can be lowered onto a holder (12) for receiving the shrink-fit chuck (2).

11. Apparatus according to Claim 10, **characterized in that** the guide part (3) comprises a lower foot region (4) which is designed for precisely positioning the holder (12) below the cooling attachment.

12. Apparatus according to one of Claims 1 to 11, **characterized in that** a mechanical stop for positioning the cooling attachment on the shrink-fit chuck (2) is arranged on the cooling attachment (1).

13. Apparatus according to one of Claims 1 to 12, **characterized in that** it comprises a device for measuring the temperature of the shrink-fit chuck (2) and/or a device for measuring the temperature of the air flow.

14. Apparatus according to one of Claims 1 to 13, **characterized in that** the cooling attachment (1) comprises air-directing elements for deflecting the air flow to covered surfaces of the shrink-fit chuck (2).

15. Apparatus according to one of Claims 1 to 14, **characterized in that** an induction device (33) is integrated in the cooling attachment (1).

## Revendications

1. Dispositif permettant le refroidissement d'un mandrin de frettage (2) comprenant un embout de refroidissement (1) pouvant être placé sur le mandrin de frettage (2), lequel embout de refroidissement présente plusieurs ouvertures d'alimentation (30) pour l'alimentation d'un fluide de refroidissement dans un espace interne (14) de l'embout de refroidissement (1), un dispositif (21, 28) pour l'alimentation d'un fluide de refroidissement liquide dans l'espace interne (14) de l'embout de refroidissement (1) par le biais des ouvertures d'alimentation (30) et un dispositif d'aspiration (15, 16, 17) pour l'aspiration hors de l'espace interne (14) de l'embout de refroidissement (1) du fluide de refroidissement liquide utilisé pour refroidir le mandrin de serrage par frettage (2) étant raccordés à l'embout de refroidissement (1), **caractérisé en ce que** le dispositif d'aspiration (15, 16, 17) présente une conduite d'aspiration (15) disposée au niveau du côté supérieur de l'embout de refroidissement, raccordée à au moins une unité d'aspiration (17) et l'unité d'aspiration (17) est prévue pour aspirer de l'air au niveau du côté inférieur de l'embout de refroidissement (1) par le biais de la conduite d'aspiration (15).

2. Dispositif selon la revendication 1, **caractérisé en ce que** le dispositif (21, 28) pour l'alimentation du fluide de refroidissement liquide présente une pompe de fluide de refroidissement (21) et un raccord de fluide de refroidissement (28) raccordé à la pompe de fluide de refroidissement (21) au niveau de l'embout de refroidissement (1) pour l'alimentation du fluide de refroidissement liquide aux ouvertures d'alimentation (30).

3. Dispositif selon la revendication 1 ou 2, **caractérisé en ce que** les ouvertures d'alimentation (30) sont connectées à un espace annulaire (26) par le biais d'alésages de refroidissement (29).

4. Dispositif selon la revendication 3, **caractérisé en ce que** l'espace annulaire (26) est situé entre une douille extérieure (22) et une douille intérieure (23) de l'embout de refroidissement (1) et **en ce que** les alésages de refroidissement (29) et les ouvertures d'alimentation (30) sont disposés dans la douille intérieure (23).

5. Dispositif selon la revendication 4, **caractérisé en ce qu'**au moins un évidement (25) est prévu dans la douille extérieure (22), à travers lequel on peut voir la douille intérieure (23) constituée de préférence d'un matériau transparent.

6. Dispositif selon la revendication 5, **caractérisé en ce que** des marquages pour le positionnement axial de l'embout de refroidissement (1) sur le mandrin de frettage (2) sont prévus au niveau de la douille intérieure (23) dans la région de l'évidement (25).

7. Dispositif selon l'une quelconque des revendications 3 à 6, **caractérisé en ce que** les alésages de refroidissement (29) s'étendent obliquement vers le haut dans la direction d'un côté supérieur de l'embout de refroidissement (1).

8. Dispositif selon les revendications 1 à 7, **caractérisé en ce que** l'embout de refroidissement (1) présente, au niveau de son côté supérieur, un raccord (31) pour la conduite d'aspiration (15).

9. Dispositif selon l'une quelconque des revendications 1 à 8, **caractérisé en ce que** l'embout de refroidissement (1) est disposé de manière déplaçable verticalement sur une partie de guidage (3) .

10. Dispositif selon la revendication 9, **caractérisé en ce que** l'embout de refroidissement (1) peut être abaissé sur un support (12) pour recevoir le mandrin de frettage (2).

11. Dispositif selon la revendication 10, **caractérisé en ce que** la pièce de guidage (3) présente une région de base inférieure (4) qui est réalisée en vue d'un positionnement exact du support (12) en dessous de l'embout de refroidissement.

12. Dispositif selon l'une quelconque des revendications 1 à 11, **caractérisé en ce qu'**une butée mécanique pour le positionnement de l'embout de refroidissement sur le mandrin de frettage (2) est disposée sur l'embout de refroidissement (1).

13. Dispositif selon l'une quelconque des revendications 1 à 12, **caractérisé en ce qu'**il présente un dispositif pour mesurer la température du mandrin de frettage (2) et/ou un dispositif pour mesurer la température du flux d'air.

14. Dispositif selon l'une quelconque des revendications 1 à 13, **caractérisé en ce que** l'embout de refroidissement (1) présente des éléments de guidage d'air pour dévier le flux d'air au niveau de surfaces dissimulées du mandrin de frettage (2).

15. Dispositif selon l'une quelconque des revendications 1 à 14, **caractérisé en ce qu'**un dispositif d'induction (33) est intégré dans l'embout de refroidissement (1).
